# EUROPÄISCHE PATENTSCHRIFT

(11) **EP 3 819 164 B1**
(45) Veröffentlichungstag und Bekanntmachung des Hinweises auf die Patenterteilung: **07.09.2022**
(21) Anmeldenummer: 20201540.0
(22) Anmeldetag: 13.10.2020
(51) Int. Cl.: B60N 2/75

(54) **FAHRZEUGAUSSTATTUNGSVORRICHTUNG**
VEHICLE FITTING DEVICE
DISPOSITIF D'ÉQUIPEMENT DU VÉHICULE

(30) Priorität: 08.11.2019 DE 102019130254
(43) Veröffentlichungstag der Anmeldung: 12.05.2021
(73) Patentinhaber: GRAMMER AG, 92289 Ursensollen (DE)
(72) Erfinder: Nuss, Ralph, 92284 Poppenricht (DE); Schollenberg, Rainer, 67661 Kaiserslautern (DE)
(74) Vertreter: Roche, von Westernhagen & Ehresmann

(56) Entgegenhaltungen:
- WO-A1-2008/037067
- DE-A1-102008 006 714
- US-A1- 2005 006 942
- US-A1- 2018 222 365

## Beschreibung

Die Erfindung betrifft eine Ausstattungsvorrichtung eines Fahrzeugs.

Die Ausstattungsvorrichtung weist eine Basis und ein relativ zu der Basis verschiebbares Schiebeteil auf. Mittels einer Führungsvorrichtung ist das Schiebeteil an der Basis geführt. Die Führung umfasst der Basis zugeordnete erste Führungsmittel und dem Schiebeteil zugeordnete zweite Führungsmittel.

Eine solche Ausstattungsvorrichtung ist z.B. eine Armlehne oder eine Mittelkonsole mit verschiebbarer Armauflage für einen Fahrzeugsitz. Eine aus offenkundiger Vorbenutzung bekannte Armlehne umfasst erste Führungsmittel in Form eines ersten Lagerelements und ein dem ersten Lagerelement gegenüberliegendes zweites Lagerelement. Zwischen den beiden Lagerelementen sind z.B. zweite Führungsmittel in Form eines Stegs des zu führenden Schiebeteils, wie z.B. eine Armauflage einer Armlehne, translatorisch bewegbar geführt.

Auch kommen bei Armlehnen zylindrische Rohrführungen als erste Führungsmittel zum Einsatz, die mit zweiten Führungsmitteln in Form von komplementären Aufnahmen zusammenwirken und eine Linearführung bilden.

Des Weiteren werden zusätzlich zu einer solchen Linearführung oder alternativ auch Führungen eingesetzt, bei welchen die Basis mit wenigstens einem in Bewegungsrichtung vorderen und einem hinteren Lenker mit dem Schiebeteil verbunden ist, so dass ein Viergelenk aus Basis, Lenkern und Schiebeteil gebildet ist.

Die Möglichkeiten der freien Vorgabe eines Bewegungsablaufs des Schiebeteils mit unterschiedlichen Neigungen der Längsachse in den unterschiedlichen Positionen waren mit derartigen Führungen begrenzt.

Es war Aufgabe der Erfindung ein Ausstattungsteil mit einem relativ zu einer Basis translatorisch bewegbaren Schiebeteil zu schaffen, wobei das Schiebeteil eine besondere Bewegungscharakteristik vollzieht. Das Schiebeteil soll nicht nur in Schieberichtung nach vorne und nach hinten bewegbar, sondern dabei auch in der Höhe bewegbar sein. Dennoch sollte der Fertigungsaufwand des Ausstattungsteils möglichst gering sein.

Die WO 2008/037067 A1 betrifft eine Armlehne mit einer Basis und einer relativ zu der Basis bewegbar geführten Armauflage. Die Basis umfasst Führungskulissen, in welchen jeweils ein Kulissenstein der Armauflage geführt ist.

Die Aufgabe wurde gelöst durch eine Ausstattungsvorrichtung mit den Merkmalen des Anspruchs 1.

Die Ausstattungsvorrichtung umfasst eine Basis und ein relativ zu der Basis translatorisch bewegbares Schiebeteil. Das Schiebeteil ist im Wesentlichen biegesteif. Die Basis weist erste Führungsmittel und das Schiebeteil weist zweite Führungsmittel auf, wobei die ersten Führungsmittel und die zweiten Führungsmittel derart zusammenwirken, dass ein Verschieben des Schiebeteils zwischen einer ersten Endposition und einer zweiten Endposition möglich ist.

Die einen Führungsmittel umfassen wenigstens ein in Bewegungsrichtung des Schiebeteils vorderes erstes Lager und wenigstens ein hinteres zweites Lager und die anderen Führungsmittel umfassen wenigstens einen in Bewegungsrichtung vorderen ersten Führungssteg und wenigstens einen hinteren zweiten Führungssteg. Der erste Steg ist in dem ersten Lager und der zweite Steg ist in dem zweiten Lager geführt. Bei der Bewegung des Schiebeteils zwischen der ersten Endposition und der zweiten Endposition bewegen sich das erste Lager und das zweite Lager relativ zu dem ersten Führungssteg und dem zweiten Führungssteg. Die Führungsmittel stellen eine Zwangsführung dar, denn die Lager haben aufgrund ihrer Anordnung in den Lagersitzen immer denselben Abstand zueinander. Damit ist jeder Lagerposition des ersten Lagers auf dem ersten Führungssteg genau eine Lagerposition des zweiten Lagers auf dem zweiten Führungssteg zugeordnet.

Der erste Führungssteg verläuft gradlinig entlang einer ersten Längsachse und der zweite Führungssteg verläuft gradlinig entlang einer zweiten Längsachse. Wenigstens eine der Längsachsen, die erste Längsachse und / oder die zweite Längsachse bildet mit einer dritten Längsachse, welche durch einen ersten Lagerpunkt des ersten Lagers und durch einen zweiten Lagerpunkt des zweiten Lagers verläuft, einen Winkel ungleich 0° auf, d.h., sie ist nicht parallel zu der dritten Längsachse.

Ein Vorteil der Erfindung besteht darin, dass durch die Anordnung der ersten und zweiten Längsachse zueinander sowie durch den Winkel größer oder kleiner als 0°, d.h. der Steigung der ersten Längsachse und der zweiten Längsachse zu der dritten Längsachse, das Schiebeteil bei der Bewegung zwischen der ersten Endposition und der zweiten Endposition unterschiedliche Relativpositionen zu dem Basisteil einnimmt, wobei ihm bei der Bewegung eine Winkeländerung widerfahren kann.

Z.B. weist die Ausstattungsvorrichtung zwei erste Lager und zwei zweite Lager sowie zwei erste Stege und zwei zweite Stege auf. Die ersten Lager sind z.B. voneinander beabstandet und die zweiten Lager sind voneinander beabstandet. Die Beabstandung ist z.B. quer zu einer Bewegungsrichtung ausgebildet. Folglich sind auch die ersten Stege und die zweiten Stege ebenfalls voneinander beabstandet. Als Lager kann z.B. das in der Patentanmeldung mit dem amtlichen Aktenzeichen DE 10 2019 130 253 beschriebene Gleitlager eingesetzt werden.

In einer einfachen Ausführungsform sind die erste Längsachse und die zweite Längsachse parallel zueinander und weisen einen Winkel zu der dritten Längsachse auf. Das Schiebeteil bewegt sich dann in einem vorderen Bereich und in einem hinteren Bereich gleichmäßig in dieselbe Richtung, d.h. in Richtung x und in Richtung z. In diesem Fall weist eine Außenfläche des Schiebeteils in allen Positionen zwischen der ersten Endposition und der zweiten Endposition die gleiche Winkelstellung zu der Basis auf.

In einer anderen Ausführungsform sind die erste Längsachse und die zweite Längsachse in einem Winkel zueinander angeordnet. Das bedeutet, dass die erste Längsachse und die zweite Längsachse unterschiedliche Steigungen oder mit anderen Worten unterschiedliche Winkel zu der dritten Längsachse aufweisen. In diesem Fall wird bei der Bewegung des Schiebeteils in x-Richtung ein Bereich des Schiebeteils, der vordere Bereich oder der hintere Bereich, weiter in z-Richtung bewegt als der andere Bereich.

Z.B. ist eine Auflagefläche des Schiebeteils in der ersten Endposition geneigt und in der zweiten Endposition etwa horizontal ausgerichtet. Wenn z.B. eine Längsachse geneigt ist und die andere Längsachse etwa horizontal ausgerichtet ist, bewegt sich ein Bereich des Schiebeteils etwa horizontal in x-Richtung, während der andere Bereich sich in Z-Richtung nach oben bzw. nach unten bewegt. Z.B. kann eine Längsachse rampenartig in in Bewegungsrichtung zwischen der ersten Endposition und der zweiten Endposition ansteigen, während die andere Längsachse etwa horizontal ausgerichtet ist.

Wenn z.B. für den hinteren Bereich des Schiebeteils die x-Koordinaten und die y-Koordinaten in der ersten Endposition und der zweiten Endposition festgelegt sind, lassen sich diese Koordinaten zu der ersten Längsachse verbinden. Die zweite Längsachse lässt sich konstruieren, indem in der hinteren Endposition ein Kreis um den Mittelpunkt des ersten Lagers in der ersten Endposition und in der zweiten Endposition geschlagen wird und die gewünschte Neigung des Schiebeteils in diesen Positionen festgelegt wird.

Wenigstens ein Lager ist in einem Lagersitz des Schiebeteils angeordnet. Das Lager kann in diesem Fall auf einfache Weise in dem Lagersitz montierbar sein.

Das Lager ist innerhalb des Lagersitzes schwenkbar gelagert. Auf diese Weise ist es möglich, dass sich die Lager in der jeweiligen Position des Schiebeteils an die Winkelstellung des Führungsstegs anpassen kann. Auch hier wird Bezug genommen auf die Anmeldung mit dem Aktenzeichen DE 10 2019 130 253 Das in dieser Anmeldung offenbarte schwenkbare Gleitlager kommt für diese Anwendung als schwenkbares Lager in Betracht. Dieses Gleitlager ist derart ausgebildet, dass ein linear ausgebildeter Führungssteg auf einer von dem Gleitlager vorgegebenen Führungsbahn in zwei entgegengesetzte Richtung relativ zu dem Gleitlager gleiten kann. Das Gleitlager ist derart ausgebildet, dass es schwenkbar in einem Lagersitz aufgenommen werden kann, so dass der Führungssteg sich während seiner Bewegung durch das Lager im Rahmen der Drehung des Lagers in unterschiedliche Richtungen bewegen kann.

Es kommen aber alternativ auch andere Gleitlager in Betracht, die zumindest innerhalb eines definierten Winkels eine Schwenkbarkeit des Gleitlagers relativ zu einem entsprechend geformten Lagersitz gestatten.

Gemäß einer Ausgestaltung der Erfindung weist das Lager wenigstens bereichsweise eine kreiszylindrische Mantelfläche auf und der mit der Mantelfläche zusammenwirkende Lagersitz ist wenigstens bereichsweise zur um einen Mittelpunkt drehbaren Aufnahme des Lagers kreiszylindrisch ausgebildet. Auf diese Weise kann sich das Lager zumindest über einen Winkelbereich hinweg drehen, welcher die Bewegung des Schiebeteils zwischen der ersten Endposition und der zweiten Endposition ermöglicht. Der Lagersitz und das Lager weisen z.B. gute Gleiteigenschaften auf, so dass die Bewegung des Lagers in dem Lagersitz möglich ist.

Das Lager ist z.B. von einem Gleitlager oder einem Wälzlager gebildet. Es können aber alle geeigneten Lager eingesetzt werden.

Die Führungsstege sind z.B. dem Basisteil zugeordnet und die Lager sind dem Schiebeteil zugeordnet. Alternativ sind die Führungsstege dem Schiebeteil zugeordnet und die Lager sind dem Basisteil zugeordnet. Die Führungsstege sind z.B. unbewegbar an dem Basisteil oder an dem Schiebeteil befestigt oder einstückig damit ausgebildet. Die Lager sind ihrerseits z.B. derart schwenkbar gelagert, dass die gesamte Führungsfläche schwenken kann. Die Lagerflächen des Lagers befinden sich z.B. beabstandet von dem Rotationsmittelpunkt des Lagers.

Das Schiebeteil ist z.B. in wenigstens einer Position mittels einer Verriegelungsvorrichtung verriegelbar. Die Verriegelungsvorrichtung umfasst erste dem Basisteil zugeordnete Verriegelungsmittel und zweite dem Schiebeteil zugeordnete Verriegelungsmittel. Z.B. sind die einen Verriegelungsmittel von einem bewegbaren, z.B. schwenkbaren Riegel und die anderen Verriegelungsmittel von entsprechenden Aussparungen gebildet, in welche der Riegel in der entsprechenden Position eingreifen kann. Wenn der Riegel mit einer Aussparung in Eingriff steht, befindet sich die Verriegelungsvorrichtung in der Riegelposition, wenn der Riegel außer Eingriff mit einer Aussparung steht, befindet sich die Verriegelungsvorrichtung in der Löseposition.

Alternativ könnten auch andere Verriegelungen eingesetzt werden, z.B. reibschlüssige Verriegelungsmittel. Die einen Verriegelungsmittel könnten z.B. von wenigstens einer Klemmbacke, insbesondere mit zwei Klemmbacken, und die anderen Verriegelungsmittel von einem mit der Klemmbacke zusammenwirkenden Klemmschiene gebildet sein, die derart ausgebildet ist, dass sie wenigsten in bestimmten Positionen des Schiebeteils mit der Klemmbacke in Klemmeingriff gebracht werden kann. Auf diese Weise ist auch eine stufenlose Verriegelung möglich, wenn der Klemmeingriff in jeder Position des Schiebeteils herstellbar ist.

Als weitere Alternative könnte die Verriegelung z.B. erste Verriegelungsmittel in Form wenigstens einer Rastfeder und zweite Verriegelungsmittel in Form einer Gegenkontur, in welche die Rastfeder formschlüssig eingreifen kann, umfassen.

Auf die Art und Weise der Verriegelung kommt es aber bei der Erfindung nicht an.

Mittels einer Betätigungsvorrichtung ist die Verriegelungsvorrichtung z.B. zwischen der Riegelposition und der Löseposition verstellbar. Die Betätigungsvorrichtung weist z.B. eine Handhabe auf, an welcher der Benutzer die Verriegelungsvorrichtung betätigen kann. Die Handhabe ist z.B. von einem schwenkbaren Hebel gebildet. Die Handhabe kann z.B. an einem vorderen Endbereich des Schiebeteils gehalten sein. Z.B. ist eine Bewegungsübertragungsvorrichtung vorgesehen, mittels welcher die Bewegung der Handhabe über eine Distanz hinweg auf die Verriegelungsvorrichtung übertragen wird.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Weitere Vorteile ergeben sich anhand der Beschreibung eines in den Fig. schematisch beschriebenen Ausführungsbeispiels. Es zeigen:
Fig. 1 eine perspektivische Ansicht eines Ausstattungsteils in Form einer Armlehne von schräg vorne,
Fig. 2 eine perspektivische Ansicht der Armlehne von schräg hinten,
Fig. 3 eine Seitenansicht der Armlehne,
Fig. 4 eine Draufsicht gemäß Ansichtspfeil A in Fig. 3, wobei ein Polster einer Armauflage der Armlehne der Übersichtlichkeit halber weggelassen wurde,
Fig. 5a eine Schnittdarstellung gemäß Schnittlinie B - B in Fig. 4
Fig. 5b eine schematische Darstellung des ersten Lagers und des zweiten Lagers relativ zu dem ersten Führungssteg und dem zweiten Führungssteg in vier unterschiedlichen Positionen des Schiebeteils, einschließlich der ersten Endposition und der zweiten Endposition,
Fig. 6 eine Schnittdarstellung gemäß Schnittlinie C - C in Fig. 4,
Fig. 7 eine Schnittdarstellung in Anlehnung an Fig. 6, wobei sich die Verriegelungsvorrichtung in einer Löseposition befindet,
Fig. 8 eine perspektivische Darstellung in Anlehnung an Fig. 1, wobei sich die Armauflage in der vorderen Endposition befindet,
Fig. 9 eine perspektivische Darstellung der Armlehne gemäß Fig. 8 von schräg hinten,
Fig. 10 eine Seitenansicht der Armlehne, wobei sich die Armauflage in der vorderen Endposition befindet,
Fig. 11 eine Draufsicht gemäß Ansichtspfeil D in Fig. 10,
Fig. 12 eine Schnittdarstellung gemäß Schnittlinie E - E in Fig. 11,
Fig. 13 eine Schnittdarstellung gemäß Schnittlinie F - F in Fig. 11, wobei sich die Verriegelungsvorrichtung in der Riegelposition befindet,
Fig. 14 eine Seitenansicht der Armauflage einer Armlehne gemäß einem zweiten Ausführungsbeispiel, wobei die Armauflage die Führungsstege umfasst,
Fig. 15 eine Seitenansicht der Basis einer Armlehne gemäß einem zweiten Ausführungsbeispiel mit daran ausgebildeten Lagersitzen und schwenkbar in den Lagersitzen gehaltenen Lagern,
Fig. 16 eine Draufsicht auf die Armlehne, wobei sich die Armauflage in der hinteren Position befindet,
Fig. 17 eine Seitenansicht der Armlehne gemäß dem zweiten Ausführungsbeispiel in der hinteren ersten Endposition, wobei die Lager und die Führungsstege gestrichelt dargestellt sind,
Fig. 18 die Armlehne in Anlehnung an Fig. 16, wobei die Armauflage sich in der vorderen zweiten Endposition befindet.

Die Armlehne insgesamt ist in den Fig. mit dem Bezugszeichen 10 bezeichnet.

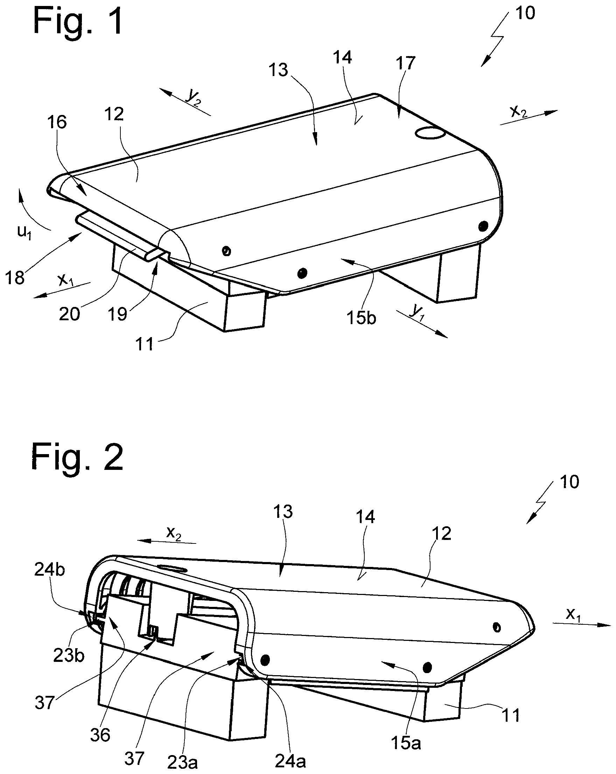

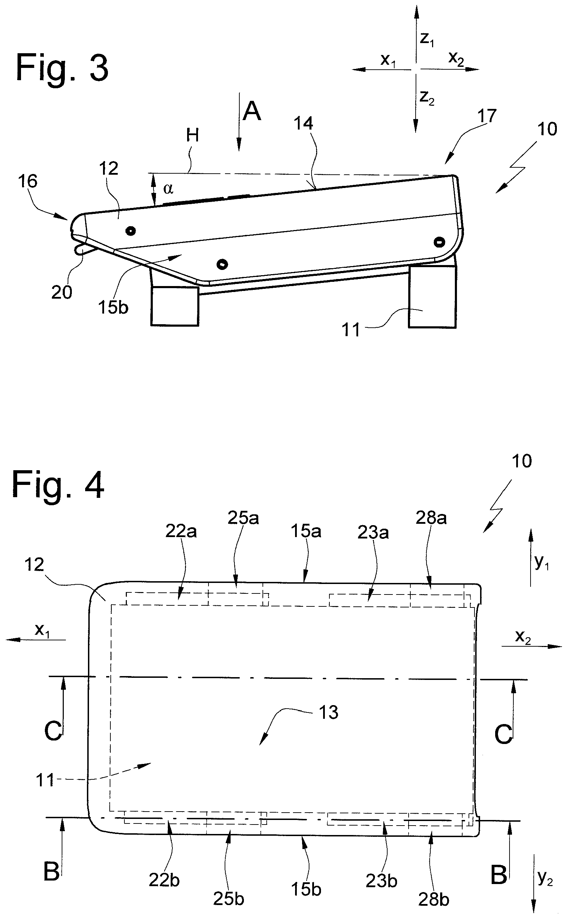

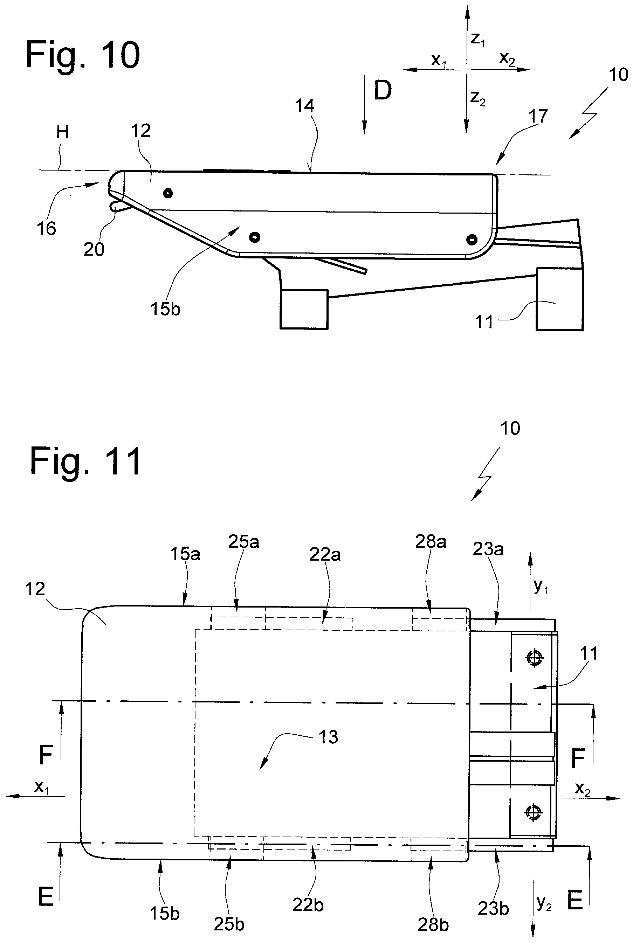

Die Armlehne umfasst gemäß Fig. 1 eine Basis 11 und eine relativ zu der Basis 11 bewegbare Armauflage 12. Die Armauflage 12 ist relativ zu der Basis 11 zwischen einer in Fig. 3 dargestellten hinteren ersten Endposition und einer in Fig. 10 dargestellten vorderen zweiten Endposition bewegbar. Die Armauflage 12 ist etwa U-förmig ausgebildet und umfasst einen mittleren Armauflagebereich 13 mit einer Armauflagefläche 14 sowie seitliche Führungsbereiche 15a und 15b. Die Armauflage 12 umfasst einen vorderen Endbereich 16 sowie einen hinteren Endbereich 17.

In Fig. 2 ist erkennbar, dass die Basis 11 zu beiden Seiten vorragende Führungsstege 23a und 23b einer Führungsvorrichtung 37 aufweist. Darüber hinaus ist ein nach oben in Richtung z1 vorragender Führungssteg 36 erkennbar, auf den hier nicht weiter eingegangen werden soll. Außerdem sind Aussparungen 24a und 24b in der Armauflage 12 zur Aufnahme der Führungsstege zu sehen.

Bei der Bewegung zwischen der ersten Endposition und der zweiten Endposition führt die Armauflage 12 sowohl eine Bewegung in Richtung x1 oder x2, als auch eine Bewegung in Richtung z1 oder z2 durch (siehe Fig. 3). Während die Armauflagefläche 14 in der ersten Endposition (siehe z.B. Fig. 3) bezüglich einer Horizontalen H einen Winkel α bildet, ist die Armauflagefläche 14 in der zweiten Endposition (siehe z.B. Fig. 10) etwa parallel zu der Horizontalen H ausgebildet.

In Fig. 4 ist eine Draufsicht auf die Armlehne 10 dargestellt, wobei die Basis 11 mit ihren ersten Führungsstegen 22a und 22b sowie ihren zweiten Führungsstegen 23a und 23b zum besseren Verständnis der Armlehne 10 gestrichtelt dargestellt ist. Auch erste Lager 25a und 25b sowie zweite Lager 28a und 28b der Armauflage 12 sind gestrichelt dargestellt, um ihre Lage - trotzdem sie eigentlich in der Draufsicht nicht erkennbar wären - kenntlich zu machen. Die Führungsstege 22a, 22b, 23a und 23b und die Lager 25a, 25b, 28a, 28b sind Teil der Führungsvorrichtung, welche die Lage Armauflage 12 relativ zu der Basis 11 in jeder Position zwischen der hinteren Endposition und der vorderen Endposition bestimmt.

Bezüglich der Richtungen y1 und y2 weist die Armlehne 10 aufgrund der Ausbildung und Anordnung der Lager 25a und 25b sowie 28a und 28b keine Freiheitsgrade auf, so dass die Armauflage 12 in diese Richtungen nicht bewegbar ist. In die Richtungen x1 und x2 sowie z1 und z2 ist die Armauflage 12 im Rahmen der durch die Führungsstege 22a, 22b, 23a, 23b vorgegebenen Bewegungsbahn bewegbar.

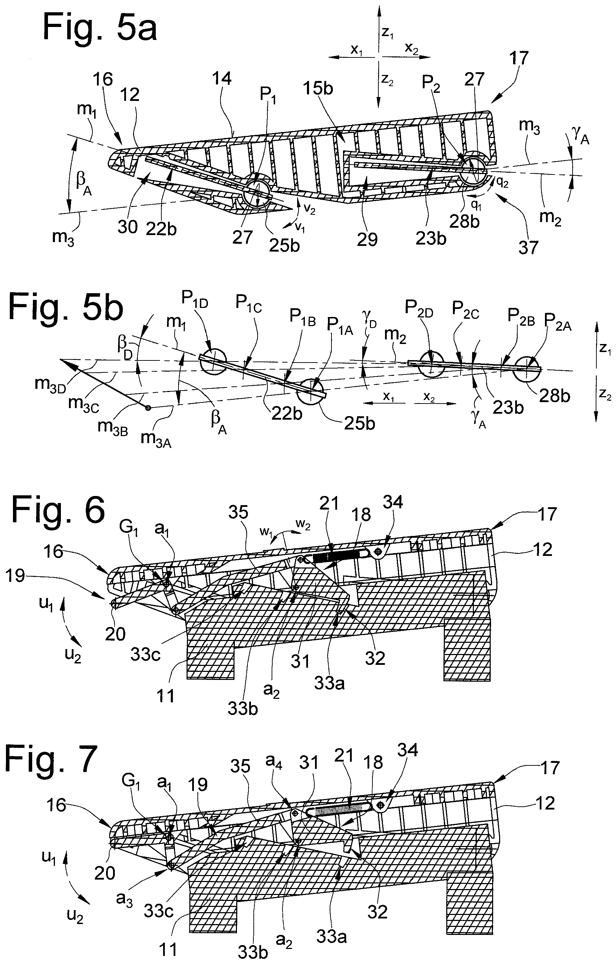

In der Schnittansicht gemäß Fig. 5a sind die Führungsstege 22b und 23b der Basis 11 dargestellt. Im Übrigen ist die Basis 1 in Fig. 5a nicht erkennbar. Außerdem ist der Führungsbereich 15b der Armauflage 12 gezeigt. In dem Führungsbereich 15b sind Lagersitze 27 ausgebildet, in denen Gleitlager 25b und 28b angeordnet sind. In gleicher Weise wirken an dem Führungsbereich 15a das Lager 25a mit dem Führungssteg 22a und das Lager 28a mit dem Führungssteg 23a zusammen. In Fig. 5a ist ferner erkennbar, dass eine Aussparung 29 für den Führungssteg 23b sowie eine Aussparung 30 für den Führungssteg 22b in der Armauflage 12 ausgebildet ist.

Das Lager 25b ist an dem Führungssteg 22b und das Lager 23b ist an dem Führungssteg 28b in entgegengesetzte Richtungen linear bewegbar geführt. Da die Lager 25b und 28b relativ zu der Armauflage 12 in den Lagersitzen 27 zwar drehbar sind aber ein Mittelpunkt P1 des Lagers 25b und ein Mittelpunkt P2 des Lagers 28b immer die gleiche Position relativ zu der Armauflage aufweisen, ist eine Zwangsführung gebildet, d.h. jeder Position des Mittelpunktes P1 ist genau eine Position des Punktes P2 zugeordnet. In der hinteren Position der Armauflage 12 gemäß Fig. 5 weist eine erste Mittellinie m1 des Führungsstegs 22b einen Winkel β zu einer die Punkte P1 und P2 verbindenden Geraden m3 auf. Eine zweite Mittellinie m2 des Führungsstegs 23b weist in dieser Position der Armauflage 12 einen Winkel y zu der Geraden m3 auf.

Es ist erkennbar, dass der zwischen der Geraden m3 und der Längsachse m1 ausgebildete Winkel β größer ist, als der zwischen der Geraden m3 und der Längsachse m2 ausgebildete Winkel γ. Daraus folgt, dass bei einer Bewegung der Armauflage 12 aus der ersten Endposition in Richtung x1 der vordere Endbereich 16 stärker in Richtung z1 bewegt wird als der hintere Endbereich 17 der Armauflage 12. Die Winkel β und γ ändern sich in diesem Fall während der Bewegung zwischen der hinteren und der vorderen Endposition.

Während der Bewegung der Armauflage 12 zwischen der hinteren Endposition und der vorderen Endposition bewegen sich die Lager 25a, 25b, relativ zu den Lagersitzen 27 in die Schwenkrichtungen v1 oder v2 und die Lager 28a, 28b bewegen sich relativ zu den Lagersitzen 27 in die Schwenkrichtungen q1 oder q2.

Es ist erkennbar, dass durch die unterschiedliche Anordnung des ersten Führungsstegs 22a und des zweiten Führungsstegs 23a zueinander (der Führungssteg 22b ist im Abstand parallel zu dem Führungssteg 22a und der Führungssteg 23b ist im Abstand parallel zu dem Führungssteg 23a ausgebildet) sowie durch die Wahl der Winkel β und γ unterschiedliche Bewegungschakteristika erzeugbar sind.

In Fig. 5b ist für vier unterschiedliche Positionen A, B, C und D des Lagers 25b relativ zu dem Führungssteg 22b sowie des Lagers 23b relativ zu dem Führungssteg 23b jeweils die Gerade m3 dargestellt, welche die Bewegungseigenschaften der Armauflage 12 des vorliegenden Ausführungsbeispiels zeigt. In der hinteren ersten Endposition der Armauflage die mit dem Zusatz "A" gekennzeichnet ist, haben das Lager 25b und das Lager 28b die Positionen P1A und P2A und die Gerade m3 die Lage m3A. Die Winkel α und γ sind ebenfalls mit dem Zusatz "A" gekennzeichnet. In der vorderen zweiten Endposition der Armauflage 12 haben das Lager 25b und das Lager 28b die Positionen P1D und P2D und die Gerade m3 die Lage m3D. Auch die Winkel α und γ tragen den Zusatz "D". Dazwischen sind noch die Positionen B und C gezeigt.

Während sich die Armauflage 12 im hinteren Endbereich 17 im Wesentlichen in Richtung x1 und lediglich geringfügig in Richtung z1 bewegt (in Richtung z1 liegen die Geraden m3 eng beieinander), findet im vorderen Endbereich 16 der Armauflage 12 eine erhebliche Bewegung in Richtung z1 statt. Wie bei einem Vergleich der Fig. 3 und 10 zu erkennen ist, wird der vordere Endbereich 16 bei der Bewegung zwischen der ersten und der zweiten Endposition der Armauflage 12 angehoben. Der Winkel α beträgt gemäß Fig. 10 0°.

Die Armlehne umfasst des Weiteren eine Verriegelungsvorrichtung 18 (siehe die Fig. 6 und 7), die zwischen einer Riegelposition und einer Löseposition bewegbar ist. In der Riegelposition ist die Armauflage 12 unbewegbar verriegelt, in der Löseposition kann die Armauflage 12 zwischen der hinteren Endposition und der vorderen Endposition in die Richtungen x1 und x2 bewegt werden. Mittels einer Betätigungsvorrichtung 19 kann die Verriegelungsvorrichtung 18 zwischen der Riegelposition und der Löseposition verstellt werden. Die Betätigungsvorrichtung umfasst eine Handhabe 20, welche für einen Benutzer gut zugänglich am vorderen Endbereich 16 der Armauflage 12 angeordnet ist und mit welcher die Verriegelungsvorrichtung 18 manuell zwischen der Riegelposition und der Löseposition bewegbar ist.

Die Verriegelungsvorrichtung 18 ist von einer Feder 21 in die Riegelposition belastet. Die schwenkbar an der Armauflage 12 gelagerte Handhabe 20 bewegt durch eine Schwenkbewegung um eine von dem Schwenkgelenk G1 gebildete Schwenkachse a1 in Richtung u1 die Verriegelungsvorrichtung 18 in die Löseposition.

Die Schnittansicht gemäß Fig. 6 zeigt die Verriegelungsvorrichtung 18 sowie die Betätigungsvorrichtung 19. Die Verriegelungsvorrichtung 18 umfasst einen mittels eines Schwenkgelenks G2 um eine Schwenkachse a2 in die Richtungen w1 und w2 schwenkbar gelagerten Riegel 31. Der Riegel 31 umfasst einen Vorsprung 32 zum Eingriff in eine von mehreren Aussparungen 33a, 33b und 33c der Basis 11. Wenn der Vorsprung 32 in einer der Aussparungen 33a, 33b oder 33c angeordnet ist (siehe z.B. Fig. 6) , befindet sich die Verriegelungsvorrichtung 18 in der Riegelposition. Wenn der Vorsprung 32 außer Eingriff mit allen Aussparungen 33a, 33b oder 33c ist, ist die Verriegelungsvorrichtung 18 in der Löseposition angeordnet (siehe Fig. 7).

Die Feder 21 ist mit einem Endbereich an einer Befestigungsstruktur 34 der Armauflage 12 und mit einem anderen Endbereich derart an dem Riegel 31 befestigt, dass ein Moment in die Richtung w2 um die Schwenkachse a2 erzeugt wird. Die Feder 21 steht in der Riegelposition unter Vorspannung.

Eine Bewegungsübertragungsvorrichtung 35 in Form eines Lenkers ist derart mittels eines Schwenkgelenks mit der Schwenkachse a3 an der Handhabe 20 sowie mittels eines Schwenkgelenks mit der Schwenkachse a4 an dem Riegel 31 angelenkt, dass das Schwenken der Handhabe 20 in Richtung u1 eine Schenkbewegung des Riegels 31 entgegen der Federkraft der Feder 21 in Richtung w1 zur Folge hat. Dabei bewegt sich der Vorsprung 32 aus der Aussparung 33a in die Löseposition gemäß Fig. 7.

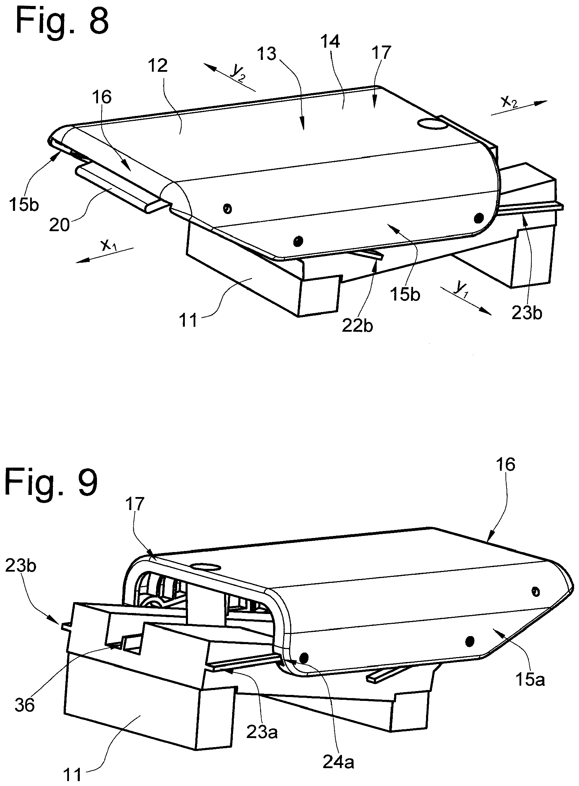

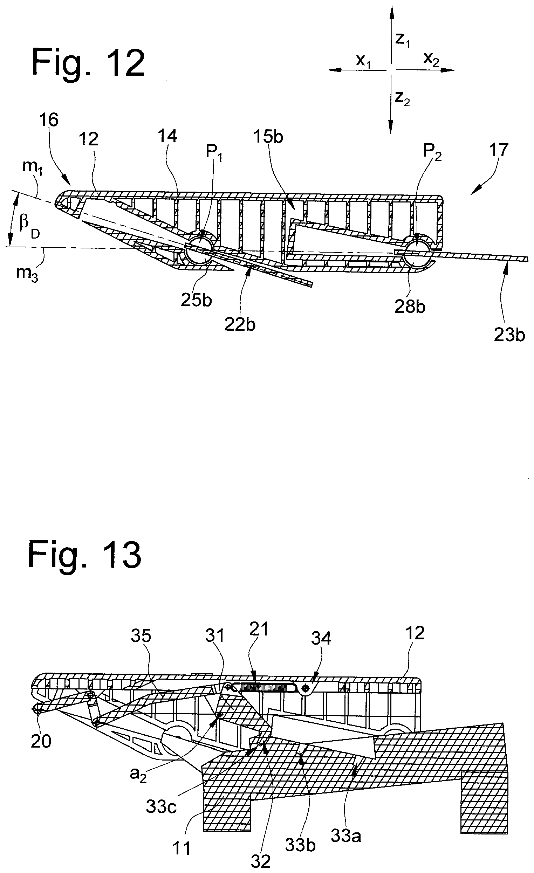

Die Löseposition ist in Fig. 7 dargestellt. Die Armauflage kann in der Löseposition in Richtung x1 in Richtung hin zu der vorderen zweiten Endposition bewegt werden. Sobald die Kraft auf die Handhabe 20 gelöst wird, wird von der Federkraft der Feder 21 der Riegel 31 in Richtung w2 bewegt, wobei über den Bewegungsüberträger 35 die Handhabe 20 in Richtung u2 geschwenkt wird. Wurde die Armauflage 12 z.B. in die zweite Endposition bewegt (siehe die Fig. 8 bis 13), und die Handhabe 20 anschließend entlastet, gerät der Vorsprung 32 mit der Aussparung 33c in Eingriff (siehe Fig. 13). Die Armauflage 12 befindet sich damit wieder in der Riegelposition, so dass eine weitere Bewegung ausgeschlossen ist.

Bei einer Rückbewegung in die erste Endposition bewegt sich die Armauflage in die Richtungen x2 und z2.

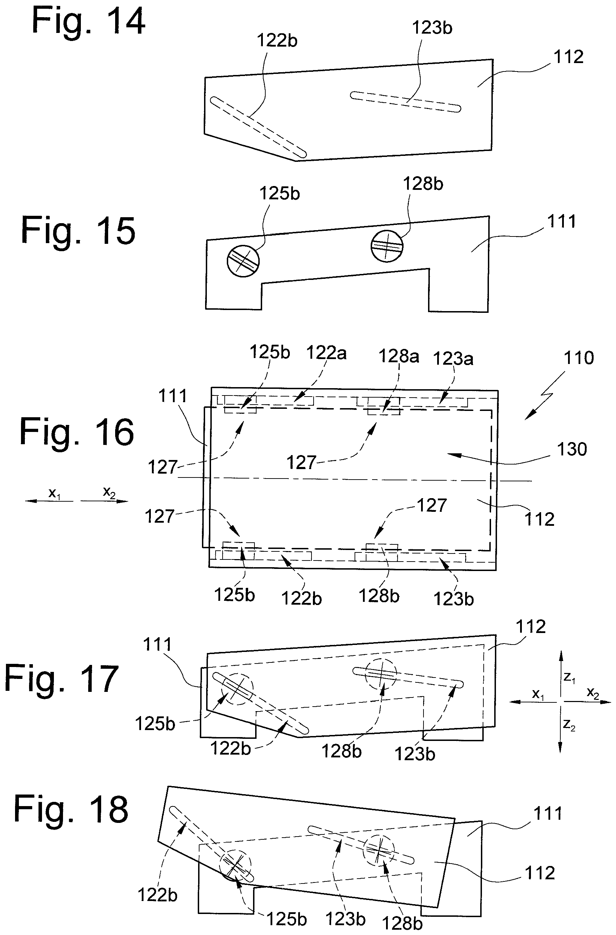

Ein zweites Ausführungsbeispiel der erfindungsgemäßen Ausstattungsvorrichtung in Form einer Armlehne 110 unterscheidet sich von dem ersten Ausführungsbeispiel lediglich bezüglich der Führungsvorrichtung 130. Bei diesem Ausführungsbeispiel weist die Armauflage 112 erste Führungsstege 122a und 122b sowie hintere Führungsstege 123a und 123b auf (siehe die Fig. 14 und 16). Die Basis 111 weist erste Gleitlager 125a und 125b sowie zweite Gleitlager 128a und 128b auf. Die Gleitlager 125a und 125b gleiten bei der Bewegung zwischen der ersten Endposition und der zweiten Endposition auf den Führungsstegen 122a und 122b und die Gleitlager 128a und 128b gleiten auf den Führungsstegen 123a und 123b. Die Lager 125a, 125b, 128a und 128b sind drehbar in Lagersitzen 127 der Basis 111 aufgenommen. Auch bei dieser Ausführungsform führt die Armauflage 112 bei gleicher Winkelstellung der Führungsstege 122a und 122b sowie 123a und 123b die gleiche Bewegung aus, wie bei dem ersten Ausführungsbeispiel.

## Patentansprüche

1. Ausstattungsteil mit einer Basis (11) und einem relativ zu der Basis (11) translatorisch zwischen einer ersten Endposition und einer zweiten Endposition bewegbaren Schiebeteil (12), mit einer Führungsvorrichtung (37), wobei die Basis (11) erste Führungsmittel und das Schiebeteil (12) zweite Führungsmittel aufweisen wobei die ersten Führungsmittel und die zweiten Führungsmittel zusammenwirken und wobei die einen Führungsmittel wenigstens ein erstes Lager (25a, 25b) aufweisen und wenigstens ein zweites Lager (28a, 28b) aufweisen und die anderen Führungsmittel wenigstens einen ersten Führungssteg (22a, 22b) und einen zweiten Führungssteg (23a und 23b) umfassen, wobei der erste Führungssteg (22a, 22b) geradlinig entlang einer ersten Längsachse (m1) und der zweite Führungssteg (23a, 23b) geradlinig entlang einer zweiten Längsachse (m2) verläuft, wobei die erste Längsachse (m1) und /oder die zweite Längsachse (m2) in einem Winkel (β, γ) zu einer Geraden (m3) angeordnet ist, welche durch einen ersten Lagerpunkt (P1) des ersten Lagers (25a, 25b) und einen zweiten Lagerpunkt (P2) des zweiten Lagers (28a, 28b) verläuft, **dadurch gekennzeichnet, dass** wenigstens ein Lager (25a, 25b, 28a, 28b) in einem Lagersitz (27) angeordnet ist und dass der Lagersitz (27) und das Lager (25a, 25b, 28a, 28b) derart ausgebildet sind, dass das Lager (25a, 25b, 28a, 28b) innerhalb des Lagersitzes (27) schwenkbar angeordnet ist.

2. Ausstattungsteil nach Anspruch 1, **dadurch gekennzeichnet, dass** die Führungsvorrichtung zwei voneinander beabstandete erste Lager (25a, 25b) und zwei voneinander beabstandete zweite Lager (28a, 28b) sowie zwei erste Stege (22a, 22b) und zwei zweite Stege (23a, 23b) aufweist.

3. Ausstattungsteil nach einem der vorangehenden Ansprüche, **dadurch gekennzeichnet, dass** die wenigstens eine erste Längsachse (m1) und die wenigstens eine zweite Längsachse (m2) parallel zueinander ausgebildet sind.

4. Ausstattungsteil nach einem der vorangehenden Ansprüche, **dadurch gekennzeichnet, dass** die wenigstens eine erste Längsachse (m1) und die wenigstens eine zweite Längsachse (m2) einen Winkel miteinander bilden, der größer oder kleiner ist als 0°.

5. Ausstattungsteil nach einem der vorangehenden Ansprüche, **dadurch gekennzeichnet, dass** das Lager (25a, 25b, 28a, 28b) wenigstens bereichsweise eine kreiszylindrische oder kugelförmige Außenfläche (22, 23) aufweist und dass der Lagersitz (27) wenigstens bereichsweise zur drehbaren Aufnahme des Lagers (25a, 25b, 28a, 28b) komplementär ausgebildet ist.

6. Ausstattungsteil nach einem der vorangehenden Ansprüche, **dadurch gekennzeichnet, dass** das Lager (25a, 25b, 28a, 28b) von einem Gleitlager oder einem Wälzlager gebildet ist.

7. Ausstattungsteil nach einem der vorangehenden Ansprüche, **dadurch gekennzeichnet, dass** die Führungsstege der Basis (11) zugeordnet sind und dass die Lager (25a, 25b, 28a, 28b) dem Schiebeteil (12) zugeordnet sind oder dass die Führungsstege dem Schiebeteil zugeordnet sind und dass die Lager (25a, 25b, 28a, 28b) der Basis (11) zugeordnet sind.

8. Ausstattungsteil nach einem der vorangehenden Ansprüche, **dadurch gekennzeichnet, dass** das Schiebeteil (12) in wenigstens einer Position mittels einer Verriegelungsvorrichtung (18) verriegelbar ist.

9. Ausstattungsteil nach Anspruch 8, **dadurch gekennzeichnet, dass** die Verriegelungsvorrichtung (18) mittels einer Betätigungsvorrichtung (19) zwischen einer Riegelposition und einer Löseposition verstellbar ist.

10. Ausstattungsteil nach einem der vorangehenden Ansprüche, **dadurch gekennzeichnet, dass** das Ausstattungsteil eine Armlehne (10), eine Konsole oder ein Tisch mit einer verschiebbaren Platte ist.

## Claims

1. Equipment part comprising a base (11) and a sliding part (12) that is translationally movable relative to the base (11) between a first end position and a second end position, comprising a guide device (37), wherein the base (11) comprises first guide means and the sliding part (12) comprises second guide means, wherein the first guide means and second guide means interact and wherein one guide means comprises at least one first bearing (25a, 25b) and at least one second bearing (28a, 28b) and the other guide means comprises at least one first guide bar (22a, 22b) and one second guide bar (23a and 23b), whereby the first guide bar (22a, 22b) extends in a straight line along a first longitudinal axis (m1) and the second guide bar (23a, 23b) extends in a straight line along a second longitudinal axis (m2), wherein the first longitudinal axis (m1) and/or the second longitudinal axis (m2) are arranged at an angle (β, γ) to a straight line (m3), which extends through a first bearing point (P1) of the first bearing (25a, 25b) and a second bearing point (P2) of the second bearing (28a, 28b), **characterized in that** at least one bearing (25a, 25b, 28a, 28b) is arranged in a bearing seat (27) and that the bearing seat (27) and the bearing (25a, 25b, 28a, 28b) are formed such that the bearing (25a, 25b, 28a, 28b) is arranged so as to be pivotable within the bearing seat (27).

2. Equipment part according to claim 1, **characterized in that** the guide device comprises two spaced-apart first bearings (25a, 25b) and two spaced-apart second bearings (28a, 28b) as well as two first bars (22a, 22b) and two second bars (23a, 23b).

3. Equipment part according to any of the preceding claims, **characterized in that** the at least one first longitudinal axis (m1) and the at least one second longitudinal axis (m2) are parallel to one another.

4. Equipment part according to any of the preceding claims, **characterized in that** the at least one first longitudinal axis (m1) and the at least one second longitudinal axis (m2) together form an angle that is greater than or less than 0°.

5. Equipment part according to any of the preceding claims, **characterized in that** the bearing (25a, 25b, 28a, 28b) comprises a circular cylindrical or spherical outer surface (22, 23) at least in regions, and **in that** the bearing seat (27) is formed to be complementary to the rotatable receptacle of the bearing (25a, 25b, 28a, 28b) at least in regions.

6. Equipment part according to any of the preceding claims, **characterized in that** the bearing (25a, 25b, 28a, 28b) is formed by a sliding bearing or a roller bearing.

7. Equipment part according to any of the preceding claims, **characterized in that** the guide bars are assigned to the base (11) and **in that** the bearings (25a, 25b, 28a, 28b) are assigned to the sliding part (12), or **in that** the guide bars are assigned to the sliding part and **in that** the bearings (25a, 25b, 28a, 28b) are assigned to the base (11).

8. Equipment part according to any of the preceding claims, **characterized in that** the sliding part (12) can be locked in at least one position by means of a locking device (18).

9. Equipment part according to claim 8, **characterized in that** the locking device (18) can be adjusted between a latched position and a released position by means of an actuating device (19).

10. Equipment part according to any of the preceding claims, **characterized in that** the equipment part is an armrest (10), a console or a table comprising a movable panel.

## Revendications

1. Pièce d'équipement avec un socle (11) et une pièce coulissante (12) déplaçable en translation par rapport au socle (11) entre une première position d'extrémité et une deuxième position d'extrémité et avec un dispositif de guidage (37), dans laquelle le socle (11) présente des premiers moyens de guidage et la pièce coulissante (12) des deuxièmes moyens de guidage, les premiers moyens de guidage et les deuxièmes moyens de guidage coopérant entre eux et des moyens de guidage comportant au moins un premier palier (25a, 25b) et présentant au moins un deuxième palier (28a, 28b) et les autres moyens de guidage comprenant au moins une première barrette de guidage (22a, 22b) et une deuxième barrette de guidage (23a et 23b), et dans laquelle la première barrette de guidage (22a, 22b) court en ligne droite le long d'un premier axe longitudinal (m1) et la deuxième barrette de guidage (23a, 23b) en ligne droite le long d'un deuxième axe longitudinal (m2), le premier axe longitudinal (m1) et/ou le deuxième axe longitudinal (m2) étant disposés selon un angle (β, y) par rapport à une droite (m3) qui passe par un premier point de palier (P1) du premier palier (25a, 25b) et un deuxième point de palier (P2) du deuxième palier (28a, 28b), **caractérisée en ce qu'**au moins un palier (25a, 25b, 28a, 28b) est disposé dans un siège de palier (27) et que le siège de palier (27) et le palier (25a, 25b, 28a, 28b) sont configurés de sorte que le palier (25a, 25b, 28a, 28b) est disposé de manière pivotante à l'intérieur du siège de palier (27).

2. Pièce d'équipement selon la revendication 1, **caractérisée en ce que** le dispositif de guidage comporte deux premiers paliers (25a, 25b) espacés l'un de l'autre et deux deuxièmes paliers (28a, 28b) espacés l'un de l'autre ainsi que deux premières barrettes (22a, 22b) et deux deuxièmes barrettes (23a, 23b).

3. Pièce d'équipement selon une des revendications précédentes, **caractérisée en ce que** l'au moins un premier axe longitudinal (m1) et l'au moins un deuxième axe longitudinal (m2) sont configurés parallèlement entre eux.

4. Pièce d'équipement selon une des revendications précédentes, **caractérisée en ce que** l'au moins un premier axe longitudinal (m1) et l'au moins un deuxième axe longitudinal (m2) forment entre eux un angle qui est supérieur ou inférieur à 0°.

5. Pièce d'équipement selon une des revendications précédentes, **caractérisée en ce que** le palier (25a, 25b, 28a, 28b) présente au moins par zones une surface extérieure cylindrique ou sphérique (22, 23) et que le siège de palier (27) est configuré au moins par zones de manière complémentaire pour recevoir le palier (25a, 25b, 28a, 28b) en rotation.

6. Pièce d'équipement selon une des revendications précédentes, **caractérisée en ce que** le palier (25a, 25b, 28a, 28b) est constitué par un palier lisse ou un roulement.

7. Pièce d'équipement selon une des revendications précédentes, **caractérisée en ce que** les barrettes de guidage sont associées au socle (11) et que les paliers (25a, 25b, 28a, 28b) sont associés à la pièce coulissante (12) ou que les barrettes de guidage sont associées à la pièce coulissante et que les paliers (25a, 25b, 28a, 28b) sont associés au socle (11).

8. Pièce d'équipement selon une des revendications précédentes, **caractérisée en ce que** la pièce coulissante (12) peut être verrouillée dans au moins une position au moyen d'un dispositif de verrouillage (18).

9. Pièce d'équipement selon la revendication 8, **caractérisée en ce que** le dispositif de verrouillage (18) peut être réglé au moyen d'un dispositif d'actionnement (19) entre une position de verrouillage et une position de libération.

10. Pièce d'équipement selon une des revendications précédentes, **caractérisée en ce que** cette pièce d'équipement est un accoudoir (10), une console ou une tablette avec un plateau coulissant.
